# EUROPÄISCHE PATENTANMELDUNG

(11) **EP 4 220 330 A1**
(43) Veröffentlichungstag der Anmeldung: **02.08.2023**
(21) Anmeldenummer: 22154552.8
(22) Anmeldetag: 01.02.2022
(51) Int. Cl.: G05D 1/02

(54) **AUTOMATISIERT GEFÜHRTES FAHRZEUG**

(71) Anmelder: Siemens Aktiengesellschaft, 80333 München (DE)
(72) Erfinder: Gutzmer, Marcus, 30827 Garbsen (DE); Krause, Uwe, 30982 Pattensen (DE); Lüddeke, Andreas, 30539 Hannover (DE)
(74) Vertreter: Siemens Patent Attorneys

(57) **Zusammenfassung**

Die Erfindung betrifft ein automatisiert geführtes Fahrzeug (1) aufweisend: wenigstens einen Fahrantrieb (23) mit einem Fahrumrichter (2); wenigstens einen Sensor (10, 11, 12, 13, 14, 15, 16, 17, 18, 19), wobei der Sensor dazu ausgebildet ist eine Beschleunigung des Fahrzeugs in x-, y- und/oder z-Richtung zu erfassen und/oder eine Raumlage des Fahrzeugs (1) zu erfassen, wobei der wenigstens eine Sensor (10, 11, 12, 13, 14, 15, 16, 17, 18, 19) im Fahrumrichter (2) ausgebildet ist.

## Beschreibung

Die Erfindung betrifft ein automatisiert geführtes Fahrzeug.

Die Erfassung der Beschleunigung bezüglich der drei Raumachsen auf elektrisch angetriebenen Fahrzeugen mit Fahrumrichter wird bisher mittels diskreter Sensoren sowie einer zugehörigen Auswerteelektronik bewerkstelligt. Diese diskreten Sensoren sind außerhalb des Fahrumrichters angeordnet.

Dies ist jedoch nachteilig, da dies mit einem erhöhten Verkabelungsaufwand verbunden ist und eine zusätzliche Auswerteeinheit benötigt wird. Dies ist mit einem hohen Aufwand verbunden und zudem kostenintensiv.

Der Erfindung liegt daher die Aufgabe zugrunde, ein automatisiert geführtes Fahrzeug dahingehend zu verbessern.

Die Lösung der Aufgabe gelingt durch Anspruch 1, d.h. ein automatisiert geführtes Fahrzeug, aufweisend:
- wenigstens einen Fahrantrieb mit einem Fahrumrichter,
- wenigstens einen Sensor, wobei der Sensor dazu ausgebildet ist eine Beschleunigung des Fahrzeugs in x-, y- und/oder z-Richtung zu erfassen und/oder eine Raumlage des Fahrzeugs zu erfassen, wobei der wenigstens eine Sensor im Fahrumrichter ausgebildet ist.

Die Raumlage liegt vorteilhaft als Vektor in einem xyz-Koordinatensystem vor.

Beschleunigung und Raumlage können mittels Transformation ineinander umgerechnet werden.

Ein automatisiert geführtes Fahrzeug ist vorteilhaft ein flurgebundenes Fördermittel mit eigenem Fahrantrieb, dass automatisch gesteuert und berührungslos geführt wird. Das automatisiert geführte Fahrzeug ist auch unter den Begriffen "Fahrerloses Transportfahrzeug, FTF," und "Automated Guided Vehicle, AGV," bekannt. Es dient vorteilhaft dem Materialtransport, beispielsweise zum Ziehen oder Tragen von Fördergut mit aktiven oder passiven Lastaufnahmemitteln.

Fahrerlose Transportsysteme, kurz: FTS, sind vorteilhaft innerbetriebliche flurgebundene Fördersysteme mit wenigstens einem automatisiert geführten Fahrzeug, vorzugsweise einer Mehrzahl an automatisiert geführten Fahrzeugen, deren primäre Aufgabe bevorzugt der Materialtransport ist. Sie können innerhalb und außerhalb von Gebäuden eingesetzt werden und weisen vorteilhaft ein oder mehrere automatisiert geführte Fahrzeuge auf, ferner vorteilhaft eine Leitsteuerung, vorteilhaft eine Einrichtung zur Standortbestimmung und Lageerfassung, vorteilhaft eine Einrichtung zur Datenübertragung sowie vorteilhaft eine Infrastruktur und periphere Einrichtungen.

Vorteilhaft ist eine Ausführung, wonach der Sensor als Beschleunigungssensor ausgebildet ist.

Der Sensor kann als Winkelbeschleunigungssensor ausgebildet sein.

Vorteilhaft ist eine Ausführung, wonach der Sensor als Raumlagesensor, insbesondere als Gyroskop, ausgebildet ist.

Vorzugsweise ist der Beschleunigungssensor als MEMS-Beschleunigungssensor ausgebildet. Vorzugsweise misst dieser mit einer Positionsmess-Schaltung die Verschiebung einer Masse, insbesondere der Masse des Fahrzeugs. Für eine digitale Weiterverarbeitung kann das gemessene Signal mithilfe eines A/D-Wandlers in eine digitale Information umgewandelt werden.

Ein Gyroskop hingegen misst eine Verschiebung einer Resonanzmasse, vorzugsweise des Fahrzeugs, und ihrer Aufhängung infolge der Coriolis-Beschleunigung.

Der Sensor ist vorteilhaft auf einer Leiterplatte des Fahrumrichters ausgebildet bzw. angeordnet und somit vorteilhaft innerhalb des Fahrumrichters realisiert.

Der Sensor ist dadurch vorteilhaft mittels PROFIsafe oder einem anderen Sicherheitsprofil zur Übertragung von sicherheitsgerichteten Daten an eine übergeordnete Steuerung angebunden.

Vorteilhaft ist eine Ausführung, wonach das automatisiert geführte Fahrzeug eine Auswerteeinheit aufweist, die zur Auswertung wenigstens einer erfassten Beschleunigung in x-, y- und/oder z-Richtung und/oder zur Auswertung der erfassten Raumlage ausgebildet ist.

Die Auswerteeinheit ist vorteilhaft im Umrichter realisiert. Um eine sicherheitsgerichtete Auswertung mittels zweier Kanäle zu realisieren sind die Sensoren vorteilhaft redundant ausgeführt.

Vorteilhaft weist das Fahrzeug pro Richtung wenigstens einen Sensor, der zur Erfassung der Beschleunigung des Fahrzeugs in x-, y- und/oder z-Richtung ausgebildet ist, auf.

Alternativ oder zusätzlich kann das Fahrzeug auch wenigstens einen Sensor, der zur Erfassung der Beschleunigung des Fahrzeugs in x-, y- und z-Richtung ausgebildet ist, aufweisen.

In anderen Worten bedeutet dies: Ein Sensor kann eine Richtung erfassen, ein Sensor kann auch zwei Richtungen erfassen oder ein Sensor kann alle drei Richtungen erfassen.

Besonders vorteilhaft ist jedoch eine Ausführung wonach, das Fahrzeug zwei oder mehr Sensoren, die zur Erfassung der Beschleunigung des Fahrzeugs in x-, y- und/oder z-Richtung ausgebildet sind, pro Richtung aufweist.

In anderen Worten bedeutet dies beispielhaft: Es sind vorteilhaft zwei, beispielsweise baugleiche bzw. identische, Sensoren vorhanden, die die x-Richtung erfassen. Oder: Es sind vorteilhaft zwei, beispielsweise baugleiche bzw. identische, Sensoren vorhanden, die die x-Richtung und die y-Richtung erfassen. Oder: Es sind vorteilhaft zwei, beispielsweise baugleiche bzw. identische, Sensoren vorhanden, die die x-Richtung und die y-Richtung und die z-Richtung erfassen.

Bevorzugt ist jedoch folgende beispielhafte Ausführung: Es sind vorteilhaft zwei, nicht baugleiche bzw. diversitär arbeitende, Sensoren vorhanden, die die x-Richtung erfassen. Oder: Es sind vorteilhaft zwei, nicht baugleiche bzw. diversitär arbeitende, Sensoren vorhanden, die die x-Richtung und die y-Richtung erfassen. Oder: Es sind vorteilhaft zwei, nicht baugleiche bzw. diversitär arbeitende, Sensoren vorhanden, die die x-Richtung und die y-Richtung und die z-Richtung erfassen.

So kann eine Beschleunigung in einer Richtung sicher erkannt werden, falls beispielsweise einer der Sensoren einer Störung unterliegt.

Vorteilhaft ist zudem eine Ausführung, wonach das Fahrzeug zwei oder mehr Sensoren, die zur Erfassung der Raumlage ausgebildet sind, aufweist.

Eine redundante Ausführung eines Raumlagesensors ist aus Sicherheitsaspekten von Vorteil.

Es ist möglich, dass das Fahrzeug nur wenigstens einen Beschleunigungssensor, aus Sicherheitsgründen vorzugsweise zwei oder mehr Beschleunigungssensoren, und keinen Raumlagesensor aufweist.

Es ist möglich, dass das Fahrzeug nur wenigstens einen Raumlagesensor, aus Sicherheitsgründen vorzugsweise zwei oder mehr Raumlagesensoren, und keinen Beschleunigungssensor aufweist.

Es ist jedoch auch möglich, dass das Fahrzeug sowohl wenigstens einen Beschleunigungssensor, aus Sicherheitsgründen vorzugsweise zwei oder mehr Beschleunigungssensoren, als auch wenigstens einen Raumlagesensor, aus Sicherheitsgründen vorzugsweise zwei oder mehr Raumlagesensoren, aufweist.

Vorteilhaft ist eine Ausführung, wonach der Fahrumrichter mechanisch mit dem Fahrzeug verbunden ist.

In anderen Worten bedeutet dies, dass der Fahrumrichter mechanisch fest bzw. mechanisch starr mit dem Fahrzeug gekoppelt ist. Dies hat den Vorteil, dass Erfassungsfehler durch sich relativ zum Fahrzeug bewegende Sensoren vermieden wird.

Vorteilhaft ist zudem eine Ausführung, wonach der wenigstens eine Beschleunigungssensor im Fahrumrichter ausgebildet ist.

Eine Realisierung des Sensors bzw. der Sensoren im Fahrumrichter, also innerhalb des Fahrumrichters, hat den Vorteil, dass Daten direkt über einen Microcontroller erfasst werden können und mittels PROFIsafe sicher an eine Steuerung kommunizierbar sind.

Die Lösung der Aufgabe gelingt ferner, durch eine Verwendung eines Sensors, der dazu ausgebildet ist eine Beschleunigung des Fahrzeugs in x-, y- und/oder z-Richtung zu erfassen und/oder eine Raumlage des Fahrzeugs zu erfassen für ein automatisiert geführtes Fahrzeug.

Die Lösung der Aufgabe gelingt ferner, durch einen Fahrumrichter für ein automatisiert geführtes Fahrzeug, aufweisend wenigstens einen Sensor, wobei der Sensor dazu ausgebildet ist eine Beschleunigung des Fahrzeugs in x-, y- und/oder z-Richtung zu erfassen und/oder eine Raumlage des Fahrzeugs zu erfassen.

Im Folgenden wird die Erfindung anhand der in den Figuren dargestellten Ausführungsbeispiele näher beschrieben und erläutert. Es zeigen:
- FIG 1: ein automatisiert geführtes Fahrzeug,
- FIG 2: ein automatisiert geführtes Fahrzeug im Detail,
- FIG 3: eine weitere Ausführungsform des automatisiert geführten Fahrzeugs,
- FIG 4: eine weitere Ausführungsform des automatisiert geführten Fahrzeugs,
- FIG 5: eine weitere Ausführungsform des automatisiert geführten Fahrzeugs.

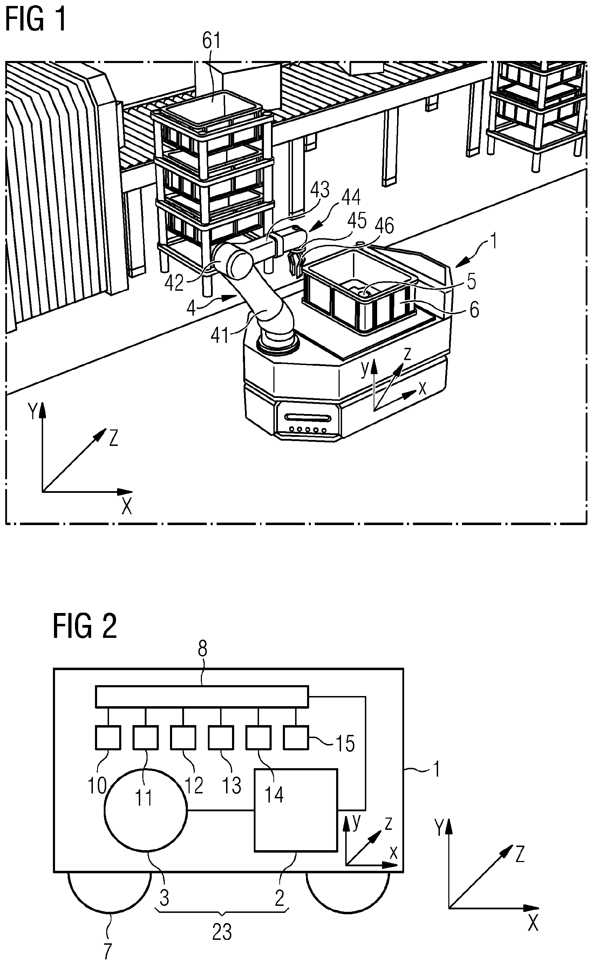

FIG 1 zeigt ein automatisiert geführtes Fahrzeug 1.

Automatisiert geführte Fahrzeuge sind zudem unter den Begriffen Automated Guided Vehicle bekannt. Automatisiert geführte Fahrzeuge 1 sind meist flurgebundene Fördermittel mit einem eigenen Fahrantrieb.

Der Fahrantrieb weist, wie in der Figur gezeigt, eine dynamoelektrische Maschine 3, vorteilhaft eine dynamoelektrische rotatorische Maschine, sowie einen Fahrumrichter 2 auf (siehe FIG 2) .

Das Fahrzeug 1 ist automatisch gesteuert und wird vorteilhaft berührungslos geführt. So können Materialien und Werkstücke fahrerlos transportiert werden.

Die Figur zeigt das Fahrzeug 1, welches eine Kiste 6 transportiert, in welcher Werkstücke 5 deponiert sind.

Die Figur zeigt ein absolutes Koordinatensystem XYZ sowie ein relatives Koordinatensystem xyz des Fahrzeugs. Eine Überführung der Koordinatensysteme ineinander ist möglich. Dies wird z. B. für eine Kartographierung einer Werkshalle benötigt. Dies wird weiter unter erläutert.

In der gezeigten Ausführung weist das automatisiert geführte Fahrzeug 1 zudem einen Roboterarm 4 auf. Der Roboterarm 4 weist einen Oberarm 41, einen Unterarm 43 sowie einen Greifer 45 auf, welche durch die Gelenke 42, 44 und 46 miteinander verbunden und bewegbar in verschiedene Richtungen sind.

So können beispielsweise Werkstücke 5 aus der Kiste 6 in eine Kiste 61 transferiert werden.

FIG 2 zeigt das automatisiert geführte Fahrzeug 1 im Detail.

Das Fahrzeug 1 weist einen Fahrantrieb 23 mit einem Fahrumrichter 2 und einer dynamoelektrischen Maschine 3 auf. Vorteilhaft ist die dynamoelektrische Maschine 3, beispielsweise mittels einer Welle, mit den Rädern 7 verbunden.

Es ist hierbei ein Einzelantrieb der Räder 7 möglich. Es ist zudem möglich, dass ein Antrieb für zwei Räder auf einer Achse, beispielsweise Hinterachse, vorgesehen ist.

Zudem ist es denkbar, dass mehrere Antriebe vorhanden sind.

Die Figur zeigt beispielhaft eine Mehrzahl an Sensoren 10, 11, 12, 13, 14, 15, welche vorteilhaft als Beschleunigungssensoren ausgebildet sind.

Die Beschleunigungssensoren 10 und 11 sind dazu eingerichtet, eine Beschleunigung in x-Richtung zu messen bzw. zu erfassen.

Die Beschleunigungssensoren 12 und 13 sind dazu eingerichtet, eine Beschleunigung in y-Richtung zu messen bzw. zu erfassen.

Die Beschleunigungssensoren 14 und 15 sind dazu eingerichtet, eine Beschleunigung in z-Richtung zu messen bzw. zu erfassen.

Durch die Beschleunigungssensoren 10, 11, 12, 13, 14, 15 erhaltene Informationen werden in der Figur in einer Auswerteeinheit 8 ausgewertet.

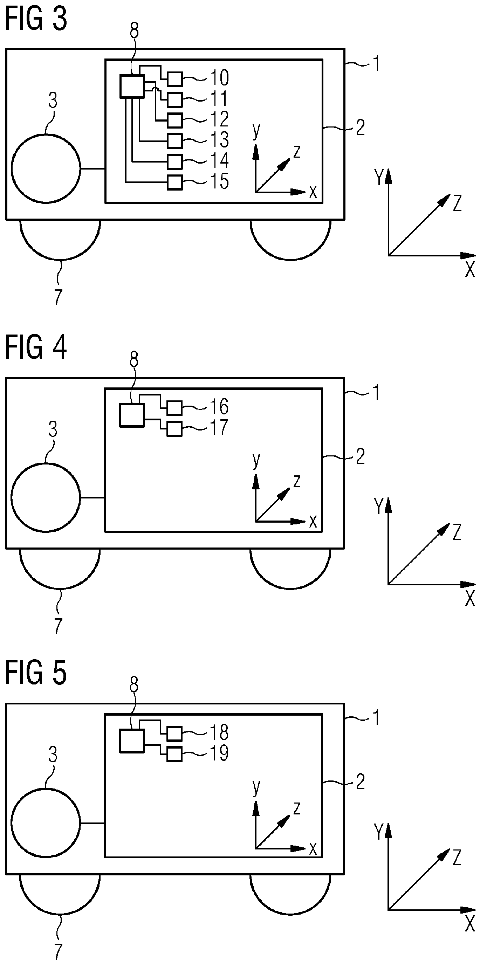

Besonders vorteilhaft ist eine Ausführung, wonach die Auswerteeinheit 8, z. B. auch im Fahrumrichter 2 (siehe FIG 3), sichergerichtet aufgebaut ist, insbesondere mittels eines zweikanaligen Aufbaus. So kann die Erfassung der Beschleunigung sicherheitsgerichtet erfolgen, da wie in der Figur gezeigt, zwei Sensoren pro Richtung vorhanden sind.

FIG 3 zeigt eine weitere Ausführungsform des automatisiert geführten Fahrzeugs 1.

In dieser Ausführung sind die Beschleunigungssensoren 10, 11, 12, 13, 14, 15 sowie die Auswerteeinheit im Fahrumrichter 2 realisiert.

Die Erfindung bietet viele Vorteile. Insbesondere diese Ausführungsform hat den Vorteil einer Kosteneinsparung, da Verkabelung entfällt und eine zusätzliche Auswerteeinheit nicht nötig ist, da diese bereits im Fahrumrichter realisiert ist.

Durch den in der Figur gezeigten zweikanaligen Aufbau ist eine sicherheitsgerichtete Erfassung möglich.

Es kann zudem beispielsweise eine Erfassung der Fahrzeugneigung in Fahrtrichtung ermittelt werden. Es kann somit eine Steigung bzw. ein Gefälle erfasst werden.

Zudem kann bei eigentlichem Stillstand des Fahrzeugs ein unbeabsichtigtes Wegrollen erkannt und dieses unbeabsichtigte Wegrollen gezielt verhindert werden.

Während der Fahrt ist eine Prognostizierung des benötigten Bremswegs in Abhängigkeit der Geschwindigkeit möglich.

Zudem kann auch eine Fahrzeugneigung senkrecht zur Fahrtrichtung, also eine Seitenneigung, erfasst werden. Im Stillstand und auch während der Fahrt des Fahrzeugs ist somit eine gezielte Erkennung und auch Verhinderung eines unbeabsichtigten Kippens des Fahrzeugs möglich.

Die Erfindung bietet zudem den Vorteil, dass ein absoluter Kurs oder eine Kursänderung erfasst werden kann. So kann ein Kippen des Fahrzeugs verhindert werden. Zudem können die Daten zur Kartographierung, beispielsweise einer Werkshalle, verwendet werden.

Dies gelingt vorteilhaft durch eine Nullpunktkalibrierung. Zu einem Zeitpunkt wird vorteilhaft angenommen, dass sich das AGV nun in einer absoluten Nullpunktposition befindet, also vorteilhaft: x_absolut=0; y_absolut=0; z_absolut=0. Die erfassten Werte für die x- bzw. y- bzw. z-Richtung können so in absolute Koordinaten überführt werden.

In unbekannten Hallen kann z. B. eine Steigung erkannt werden und dies mitgeschrieben werden, da ein aktueller Aufenthaltsort des Fahrzeugs bekannt ist.

Die Erfindung bietet zudem den Vorteil, dass Schwingungen erfasst werden können und somit dynamische Instabilitäten, wie Taumeln und Schleudern, erkannt und verhindert werden können.

Die Erfindung bietet zudem den Vorteil, dass die Sicherheitsfunktion SLA (Safely Limited Acceleration) umgesetzt werden kann. Eine Limitierung der tatsächlichen physikalischen transformatorischen Beschleunigung ist möglich, Beschleunigung und Geschwindigkeit des Fahrzeugs können eingeschränkt werden. Dies ist besonders wichtig für den Transport von Gefahrgut oder Bauteilen und Stoffen, die nur eine bestimmte Beschleunigung erfahren dürfen.

Der beschriebene Sensor misst vorteilhaft direkt die Beschleunigung. Es erfolgt keine mathematische Berechnung aus der Geschwindigkeit, was fehlerbehaftet sein kann.

Insbesondere in Hinblick auf SLA ist die vorliegende Erfindung sicherer und zuverlässiger.

FIG 4 zeigt eine weitere Ausführungsform des automatisiert geführten Fahrzeugs.

Es sind die zwei Sensoren 16 und 17 gezeigt, welche als Beschleunigungssensoren ausgebildet sind. Die Sensoren 16 und 17 sind dazu ausgebildet alle drei Richtungen x, y und z zu erfassen. Dies ist von Vorteil, da weniger Sensoren benötigt werden.

FIG 5 zeigt eine weitere Ausführungsform des automatisiert geführten Fahrzeugs.

Es sind die Sensoren 18 und 19 dargestellt, welche in dieser Ausführung als Raumlagesensoren ausgebildet sind. Die redundante Ausführung verbessert eine Sicherheit der Messung.

Es ist möglich, Raumlagesensoren und Beschleunigungssensoren zu kombinieren (nicht dargestellt), beispielsweise je zwei Raumlagesensoren und Beschleunigungssensoren innerhalb eines Fahrumrichters. Dies ist besonders sicher.

## Patentansprüche

1. Automatisiert geführtes Fahrzeug (1) aufweisend:
- wenigstens einen Fahrantrieb (23) mit einem Fahrumrichter (2) ,
- wenigstens einen Sensor (10, 11, 12, 13, 14, 15, 16, 17, 18, 19), wobei der Sensor dazu ausgebildet ist eine Beschleunigung des Fahrzeugs in x-, y- und/oder z-Richtung zu erfassen und/oder eine Raumlage des Fahrzeugs (1) zu erfassen, wobei der wenigstens eine Sensor (10, 11, 12, 13, 14, 15, 16, 17, 18, 19) im Fahrumrichter (2) ausgebildet ist.

2. Automatisiert geführtes Fahrzeug (1) nach Anspruch 1, wobei der Sensor (10, 11, 12, 13, 14, 15, 16, 17, 18, 19) als Beschleunigungssensor ausgebildet ist.

3. Automatisiert geführtes Fahrzeug (1) nach einem der vorhergehenden Ansprüche, wobei der Sensor als Raumlagesensor, insbesondere als Gyroskop, ausgebildet ist.

4. Automatisiert geführtes Fahrzeug (1) nach einem der vorhergehenden Ansprüche, ferner aufweisend eine Auswerteeinheit (8) zur Auswertung wenigstens einer erfassten Beschleunigung in x-, y- und/oder z-Richtung und/oder zur Auswertung der erfassten Raumlage.

5. Automatisiert geführtes Fahrzeug (1) nach einem der vorhergehenden Ansprüche, wobei das Fahrzeug (1) pro Richtung wenigstens einen Sensor (10, 11, 12, 13, 14, 15, 16, 17, 18, 19), der zur Erfassung der Beschleunigung des Fahrzeugs (1) in x-, y- und/oder z-Richtung ausgebildet ist, aufweist.

6. Automatisiert geführtes Fahrzeug (1) nach einem der vorhergehenden Ansprüche, wobei das Fahrzeug (1) wenigstens einen Sensor (10, 11, 12, 13, 14, 15, 16, 17, 18, 19), der zur Erfassung der Beschleunigung des Fahrzeugs (1) in x-, y- und z-Richtung ausgebildet ist, aufweist.

7. Automatisiert geführtes Fahrzeug (1) nach Anspruch 5 oder 6, wobei das Fahrzeug (1) zwei oder mehr Sensoren (10, 11, 12, 13, 14, 15, 16, 17, 18, 19), die zur Erfassung der Beschleunigung des Fahrzeugs (1) in x-, y- und/oder z-Richtung ausgebildet sind, pro Richtung aufweist.

8. Automatisiert geführtes Fahrzeug (1) nach einem der vorhergehenden Ansprüche, wobei das Fahrzeug (1) zwei oder mehr Sensoren (10, 11, 12, 13, 14, 15, 16, 17, 18, 19), die zur Erfassung der Raumlage ausgebildet sind, aufweist.

9. Automatisiert geführtes Fahrzeug (1) nach einem der vorhergehenden Ansprüche, wobei der Fahrumrichter (2) mechanisch mit dem Fahrzeug (1) verbunden ist.

10. Verwendung eines Sensors (10, 11, 12, 13, 14, 15, 16, 17, 18, 19), der dazu ausgebildet ist eine Beschleunigung des Fahrzeugs in x-, y- und/oder z-Richtung zu erfassen und/oder eine Raumlage des Fahrzeugs (1) zu erfassen für ein automatisiert geführtes Fahrzeug (1).

11. Fahrumrichter (2) für ein automatisiert geführtes Fahrzeug (1), aufweisend wenigstens einen Sensor (10, 11, 12, 13, 14, 15, 16, 17, 18, 19), wobei der Sensor dazu ausgebildet ist eine Beschleunigung des Fahrzeugs in x-, y- und/oder z-Richtung zu erfassen und/oder eine Raumlage des Fahrzeugs (1) zu erfassen.
